Europäisches Patentamt

European Patent Office

Office européen des brevets

(11) Publication number: **0 231 130**
A2

# (12) EUROPEAN PATENT APPLICATION

(21) Application number: 87300814.8

(22) Date of filing: 29.01.87

(51) Int. Cl.³: **C 04 B 35/58**

(30) Priority: 31.01.86 JP 20793/86

(43) Date of publication of application:
05.08.87 Bulletin 87/32

(84) Designated Contracting States:
DE FR GB

(71) Applicant: Kabushiki Kaisha Toshiba
72, Horikawa-cho Saiwai-ku
Kawasaki-shi Kanagawa-ken 210(JP)

(72) Inventor: Komatsu, Michiyasu c/o Kabushiki Kaisa
Toshiba
c/o Patent Division 1-1 Shibaura 1-chome
Minato-ku Tokyo(JP)

(74) Representative: Freed, Arthur Woolf et al,
MARKS & CLERK 57-60 Lincoln's Inn Fields
London WC2A 3LS(GB)

(54) Sintered silicon nitride ceramic article and method for production thereof.

(57) A sintered silicon nitride article exhibiting highly desirable mechanical strength at room temperature and at elevated temperatures as well and a method for the production thereof are disclosed. The sintered ceramic article is obtained by firing a ceramic mixture comprising not more than 10% by weight of the oxide of a rare earth element and not more than 10% by weight of aluminum nitride as additives and the balance of silicon nitride powder obtained by the silicon diimide thermal decomposition method and having an $\alpha$-phase silicon nitride content of not less than 95%, a carbon content of not more than 0.1%, and an oxygen content of not more than 1.5%.

EP 0 231 130 A2

1

## SINTERED SILICON NITRIDE CERAMIC ARTICLE AND METHOD FOR PRODUCTION THEREOF

This invention relates to a sintered silicon nitride ceramic article and a method for the production thereof.

Sintered ceramic articles using silicon nitride as a main component thereof possess highly satisfactory thermal stability enough to withstand heat up to 1,900°C and low thermal expansion coefficient and, therefore, excel in resistance to heat shock. Owing to these characteristic qualities, they are being tried for use in various high-strength heat-resistant parts such as gas turbines and nozzles. Further because of their high reluctance to corrode metals, their utility in applications to refractory materials destined to be exposed to fused metals has been realized. Because of their high resistance to wear, their utility in applications to sliding parts such as bearings has also been realized.

For the purpose of realizing practical use of these materials, diligent studies are being devoted in search of method capable of producing materials of high strength in more easilily sintering form. These studies must be performed severally in manners suitable for the characteristic qualities of varying powdered raw materials being used. As means of obtaining powdered raw materials, the metal nitriding method and the method resorting to the thermal decomposition of silicon diimide or amide are available. The study on the technique of adapting the powdered raw material produced by the metal nitriding method for easier sintering has made a siable advance because of a long history of the powdered raw material itself. On the powdered raw material produced by the silicon diimide thermal decomposition method, however, no sufficience of only recent development.

The present invention has been perfected as the result of a study conducted on the powder by the silicon diimide thermal decomposition method, particularly on the additives used therein.

The inventors prepared sintered silicon nitride ceramic articles using varying powdered silicon nitride raw materials produced by varying methods and studies them with respect to their characteristic qualities. They have consequently found that a sintered silicon nitride article using powdered silicon nitride produced by the silicon diimide thermal decomposition method exhibits highly desirable performance.

The present invention has been perfected based on the finding described above. It aims to provide a sintered silicon nitride ceramic article excelling in homogeneity and enjoining improved mechanical properties and a method for the production thereof.

To be specific, the sintered silicon nitride ceramic article of the present invention is characterized by the fact that it is obtained by firing a ceramic mixture comprising not more than 10% by weight of the oxide of a rare earth element and not more than 10% by weight of aluminum nitride and the balance of silicon nitride powder obtained by the silicon diimide thermal decomposition method and having and an $\alpha$-phase silicon nitride content of not less than 95%, a carbon content of not more than 0.1%, and an oxygen content of not more than 1.5%. The method for the production thereof is characterized by molding in a prescribed shape a ceramic mixture comprising not more than 10% by weight of the oxide of a rare earth element and not more than 10% by weight of aluminum nitride and the balance of silicon nitride powder obtained by the silicon diimide thermal decomposition method and having an $\alpha$-phase silicon nitride content of not less than 95%, a carbon content of not more than 0.1%, and an oxygen content of not more than 1.5% and sintering the shaped mixture in a non-oxidizing atmosphere at a temperature in the range of 1,650° to 1,850°C.

As concrete examples of the oxide of a rare earth element, one of the additive components contemplated by the present invention, yttrium oxide and cerium oxide can be cited. Any of these oxides of rare earth elements functions

as a sintering promoting agent and is included in the ceramic mixture in an amount of not more than 10% by weight, preferably 1% ∼ 7% by weight. For the purpose of enabling the characteristic qualities of silicon nitride to be manifested effectively, the amount of this oxide to be incorporated in the mixture is desired to be as small as permissible. Since the silicon nitride powder produced by the silicon diimide thermal decomposition method can be thoroughly sintered even when the additives are used in a small amount, the oxide of a rare earth element used in an amount of less than 10% is capable of conferring ample mechanical strength and thermal shock resistance upon the sintered article.

In the present invention, aluminum nitride contributes to enhancing the mechanical strength of the sintered ceramic article at elevated temperatures and, at the same time, promoting the sintering of the shaped ceramic mixture and is used in an amount of not more than 10% by weight, preferably 1% ∼ 7% by weight.

As effective additive components, aluminum oxide, titanium dioxide, zirconium oxide, magnesium oxide, hafnium oxide, hafnium carbide, and molybdenum carbide can be cited besides those mentioned above. At least one of these additive components is used in an amount of not more than 5% by weight. When two or more such additive components are used jointly, the total amount thereof is not more than 10% by weight, preferably not more than 7% by weight.

The silicon nitride which is the principal component of the sintered silicon nitride ceramic article of the present invention is produced by the silicon diimide thermal decomposition method. It is of a selected grade containing not less than 95% of $\alpha$-phase silicon nitride, having an oxygen content of not more than 1.5% by weight and a carbon content of not more than 0.1% by weight, and entraining metallic impurities only in a small amount. When silicon nitride is used in the range mentioned above, the sintered article to be produced is allowed to acquire improved homogeneity.

In accordance with this invention, the mixture containing the components in composition ratios in the prescribed ranges is first molded in a stated shape and this shaped mixture is sintered in a non-oxidizing atmosphere at a temperature in the range of 1,650° to 1,850°C.

Here, such non-oxidizing gas as nitrogen gas or argon is selected to form the atmosphere for surrounding the site of sintering. This is because, in an atmosphere containing oxygen, the silicon nitride is oxidized into $SiO_2$ at elevated temperatures and, as a result, the sintered silicon nitride ceramic article possessing highly desirable qualities such as high strength at elevated temperatures as aimed at by this invention cannot be obtained. This sintering can be effected by the atmospheric pressure sintering method or by some other suitable method such as, for example, the hot press method, the atmospheric press method, or the hot hydrostatic sintering (HIP) method. As a result of this sintering, there is obtained a sintered silicon nitride ceramic article which has a dense texture and possesses highly desirable high-temperature mechanical strength and high heat shock resistance.

Now, the present invention will be described below with reference to working examples.

Example 1:

A mixed powder consisting of 93.4% by weight of silicon nitride produced by the silicon diimide thermal decomposition method and possessed of the characteristic qualities shown in Table 1, 4.8% by weight of yttrium oxide, and 1.8% by weight of aluminum nitride was subjected to two hours' hot press sintering at 1,750°C under 400 kg/cm$^2$ to produce a sintered silicon nitride ceramic article (S-1) measuring 50 mm X 50 mm X 7 mm (in thickness).

Table 1

| Characteristic qualities of powder | |
|---|---|
| $\alpha$-Phase (%) | 96.5 |
| Average particle diameter (μm) | 0.71 |
| Specific surface (m²/g) | 14.0 |
| Analyses (%) | |
| O | 1.05 |
| C | 0.04 |
| N | 38.7 |
| Al | 0.005 |
| Fe | 0.01 |
| Ca | 0.005 |
| Mg (Cl) | 0.01 |

For comparison, a sintered silicon nitride ceramic article (R-1) was produced by following the procedure of Example 1, excepting silicon nitride powder produced by the metal nitriding method was used instead.

Example 2:

A mixed powder consisting of 91.0% by weight of the same silicon nitride powder as used in Example 1, 4.5% by weight of yttrium oxide, 2.7% by weight of aluminum nitride, and 1.8% by weight of aluminum oxide was pulverized and mixed with a solvent in a ball mill having a rubber lining for about 24 hours to prepare a raw material powder. The raw material powder and stearic acid added thereto as a caking agent were molded under the pressure of about 700

$kg/cm^2$ to prepare a shaped mixture measuring 50 mm X 50 mm X 7 mm (in thickness). A sintered silicon nitride ceramic article (S-2) was produced by subjecting the shaped mixture to atmopheric pressure sintering at 1,800 C for two hours.

For comparison, a sintered silicon nitride ceramic article (R-2) was produced by following the procedure of Example 2, excepting silicon nitride powder produced by the metal nitriding method was used instead.

The sintered ceramic articles obtained as described above were tested for density and bending strength (three point bending strength test). The results were as shown in Table 2.

Table 2

| Sample | Density (g/cc) | Bending strength $(kg/mm^2)$ | |
|---|---|---|---|
| | | Room temperature | 1,200°C |
| S-1 | 3.255 | 125 | 95 |
| S-2 | 3.243 | 110 | 90 |
| R-1 | 3.230 | 105 | 70 |
| R-2 | 3.220 | 90 | 50 |

Example 3-7:

Other examples of the present invention are shown in Table 3. The examples according with this invention are indicated as S-3 through S-7 and the comparative experiments (according with the metal nitriding method) as R-3 through R-7 respectively.

In Table 3, K  Stands for fracture toughness the value of which increases with the increasing magnitude of toughness.

Table 3

| Sample | Composition (% by weight) | | | | Sintering method | Bending strength (kg/mm$^2$) | | Krc (MPa $\sqrt{m}$) |
|---|---|---|---|---|---|---|---|---|
| | Y$_2$O$_3$ | AlN | Al$_2$O$_3$ | Other additive | | Room temperature | 1,200°C | |
| S-3 | ～5 | 1～5 | - | - | Atmosphere pressure sintering (1,750°C) | 100 | 90 | 7 |
| S-4 | ～5 | 1～5 | - | HfO2 0.5～3 | | 100 | 90 | 7 |
| S-5 | ～5 | 1～5 | 0.5～2 | - | | 115 | 80 | 7.5 |
| S-6 | ～5 | 1～5 | 0.5～2 | TiO$_2$ 0.5～3 | | 115 | 65 | 7.5 |
| R-3 | ～5 | 3～5 | - | - | | 80 | 60 | 5 |
| R-4 | ～5 | 3～5 | - | HfO2 0.5～3 | | 80 | 50 | 5.5 |
| R-5 | ～5 | 1～5 | 3～5 | - | | 85 | 50 | 5.5 |
| R-6 | ～5 | 1～5 | 2～5 | TiO$_2$ 0.5～3 | | 85 | 40 | 5.5 |
| S-7 | ～5 | 1～3 | 0～2 | - | Hot press (1,750°C, 400 kg/cm$^2$) | 130 | 100 | 8 |
| R-7 | ～5 | 1～3 | 0～2 | - | | 95 | 65 | 6 |

As described above, the sintered silicon nitride ceramic articles produced by the method of this invention are homogeneous and excellent in strength at normal room temperature and at elevated temperatures as well.

What is claimed is:

(1) A sintered silicon nitride ceramic article produced by firing a ceramic mixture comprising not more than 10% by weight of the oxide of a rare earth element and not more than 10% by weight of aluminum nitride as additives and the balance of silicon nitride powder obtained by the silicon diimide thermal decomposition method and having an $\alpha$-phase silicon nitride content of not less than 95%, a carbon content of not more than 0.1%, and an oxygen content of not more than 1.5%.

(2) A sintered silicon nitride ceramic article according to claim 1, wherein said ceramic mixture further comprises not more than 10% by weight of aluminum oxide as an additive.

(3) A sintered silicon nitride ceramic article according to claim 1 or claim 2, wherein the total amount of said additives is not more than 10% by weight.

(4) A sintered silicon nitride ceramic article according to claim 1 or claim 2, wherein the total amount of iron, aluminum, calcium, and magnesium in said silicon nitride powder is not more than 0.05% by weight.

(5) A method for the production of a sintered silicon nitride ceramic article, which comprises molding in a prescribed shape a ceramic mixture comprising not more than 10% by weight of the oxide of a rare earth element and not more than 10% by weight of aluminum nitiride as additives and the balance of silicon nitride powder obtained by the silicon diimide thermal decomposition method and having an

$\alpha$-phase silicon nitride content of not less than 95%, a carbon content of not more than 0.1%, and an oxygen content of not more than 1.5% and sintering the shaped mixture in a non-oxidizing atmosphere at a temperature in the range of 1,650° to 1,850°C.

(6) A method according to claim 5, wherein said ceramic mixture further comprises not more than 10% by weight of aluminum oxide as additive.

(7) A method according to claim 5 or claim 6, wherein the total amount of said additives is not more than 10% by weight.

(8) A method according to claim 5, claim 6, or claim 7, wherein the total amount of iron, aluminum, calcium, and magnesium in said silicon nitride powder is not more than 0.05% by weight.